Europäisches Patentamt

European Patent Office

Office européen des brevets

(19)

(11) Veröffentlichungsnummer: **0 008 588**
A1

# (12) EUROPÄISCHE PATENTANMELDUNG

(21) Anmeldenummer: 78100716.6

(22) Anmeldetag: 22.08.78

(51) Int. Cl.³: **B 01 D 59/20**
**B 01 D 53/24**

(43) Veröffentlichungstag der Anmeldung:
19.03.80 Patentblatt 80/6

(84) Benannte Vertragsstaaten:
BE CH DE FR NL SE

(71) Anmelder: HAGA ZENTRIFUGEN GMBH
Reichenhallerstrasse 52
D-8228 Freilassing(DE)

(72) Erfinder: Gazda, Hans Otto Ernst
Anton Kriegergasse 155
A-1238 Wien(AT)

(74) Vertreter: Frobenius, Karl
Ludwigstrasse 12
D-8230 Bad Reichenhall(DE)

(54) Vorrichtung zum Trennen bzw. Anreichern von gasförmigen Gemischen.

(57) Verfahren und Vorrichtung zum Trennen bzw. Anreichern von gasförmigen Gemischen, insbesondere Isotopengemischen, in Fraktionen verschieden grossen spezifischen Gewichtes, vorzugsweise zur Anreicherung von U 235 unter Verwendung von Uranhexafluorid, wobei das gasförmige Gemisch durch eine Zentrifuge in radialer Richtung beschleunigt und im Austrittbereich am Rand der Zentrifuge in die beiden Fraktionen getrennt wird, wobei erfindungsgemäss vorgesehen ist, dass im Austrittsbereich am äusseren Rand der Zentrifuge das Gasgemisch in eine turbulente Strömung (10) innerhalb einer Grenzschicht versetzt wird und die schweren Komponeten der Gasmischung infolge des Zusammenspiels der durch die Rotation der Zentrifuge hervorgerufenen Zentrifugalkräfte mit den innerhalb der Turbulenzballen wirkenden Zentrifugalkräfte aus der Grenzschicht herausdiffundiert und aus der mit den leichten Komponenten angereicherten Grenzschicht die leichte Fraktion des Gemisches durch Abführleitungen (4) abgeleitet wird.

FIG. 1

EP 0 008 588 A1

-1-

**Vorrichtung zum Trennen bezw. Anreichern von gasförmigen Gemischen.**

Zum Trennen bez. Anreichern von gasförmigen Gemischen, insbesondere von Isotopengemischen, sind verschiedene Verfahren bekannt.

Zur Anreicherung des U 235 Gehaltes wird in der Praxis in erster Linie das Diffusionsverfahren verwendet. Weiters sind noch das sogenannte Gaszentrifugen- und das Trenndüsenverfahren bekannt geworden. Bei allen drei Verfahren müssen wegen des geringen Trenneffektes bzw. des kleinen Durchsatzes eine grössere Anzahl hintereinander geschaltet werden, um die nötige Anreicherung zu erhalten. Weiters sind bei diesen bekannten Verfahren der grosse Energieverbrauch und die grossen Investitionskosten nachteilig.

Aus der OE-PS 238 697 ist eine Vorrichtung zum Trennen bezw. Anreichern von gasförmigen Gemischen bekannt. Diese bekannte Vorrichtung weist eine mit hoher Geschwindigkeit umlaufende Scheibe auf, welche einen in radialer Richtung verlaufenden ringförmigen Zuführungsbereich für das Gemisch aufweist, welcher durch mindestens einen, in radialer Richtung verlaufenden Düsenspalt einer ringförmigen Düse unterteilt ist und der Zuführungsbereich anschliessend an den Düsenspalt annähernd in der Ebene des Spaltes einen ringförmigen in radialer Richtung verlaufenden Abführkanal für die schwere Fraktion des Gemisches und zu beiden Seiten des Düsenspaltes in radialer Richtung verlaufende ringförmige Abführkanäle für die leichte Fraktion des Gemisches ausweist. Diese bekannte Vorrichtung hat sich jedoch zur Isotopentrennnng insbesondere zur Uran-Isotopentrennung in der Praxis nicht bewährt.

Aufgabe der Erfindung ist es, eine Vorrichtung der zuletzt angeführten Bauart zu schaffen, welche sich insbesondere zu Uran-Isotopentrennung bezw. Anreicherung eignet.

Dies wird erfindungsgemäss dadurch erreicht, dass mehrere Scheiben parallel zueinander auf einer gemeinsame Welle angeordnet sind und die Ableitkanäle für die leichte und/oder schwere Fraktion des Gemisches mehrere Scheiben miteinander verbunden sind.

Bei der erfindungsgemässen Vorrichtung findet eine interne Kaskadierung statt, da vorzugsweise mehrere hintereinander geschaltete Trenndüsen pro Scheibe vorgesehen sind. Die Zentrifugalkräfte dienen der Kompression und nicht der Trennung selbst. Es kann ein radialer Druckanstieg von ca. 4.000 : 1 herrschen. Eine erfindungsgemässe Vorrichtung, die diese Druckunterschiede zwischen Zentrum und Peripherie nutzt, erzielt theoretisch für die Uran-Isotopentrennung einen elementaren Trenneffekt von 1,07. Ausgehend von einer Düsenspaltbreite von 0,2 mm und einem Düsenringdurchmesser von 200 mm, was einem Durchsatz von ca. 10 Liter Uranhexafluoridgas per Sekunde entspricht, würde rechnerisch eine Kaskade von 22 Trennscheiben eine Jahresleistung von 57 Tonnen auf 3% angereichertes U 235 erbringen.

-3-

Die Erfindung wird nun näher unter Bezugnahme auf die Zeichnungen beschrieben. In den Zeichnungen zeigen:

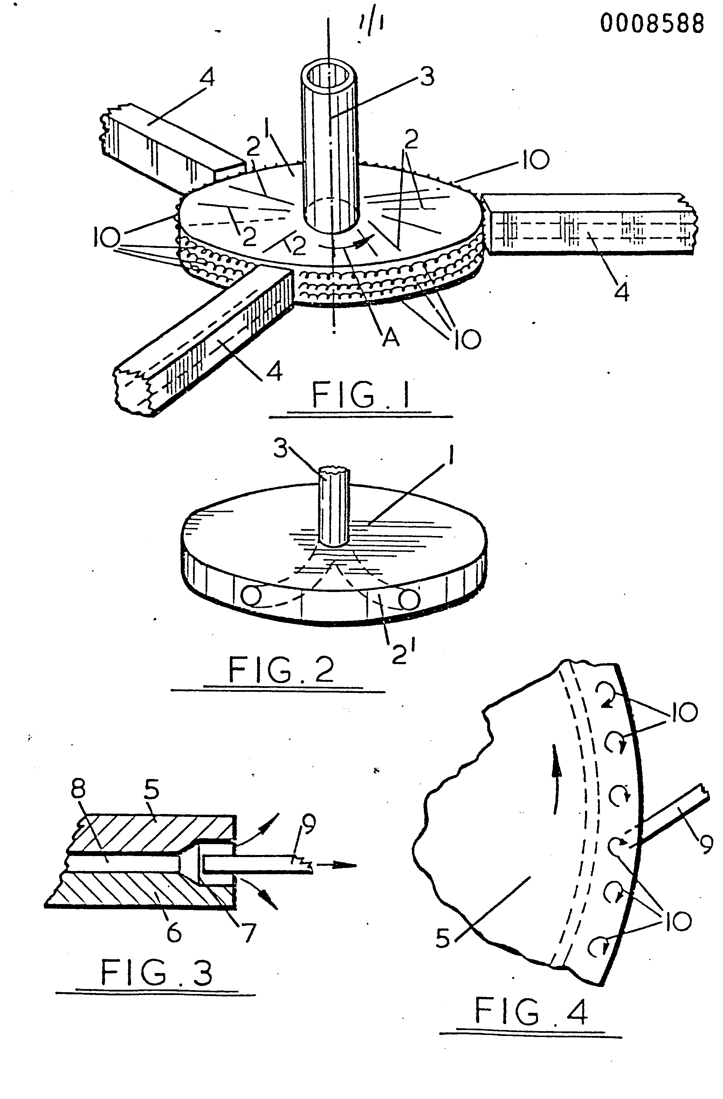

Fig. 1 einen Axialschnitt durch eine Hälfte einer erfindungsgemässen Vorrichtung in schematischer Form, Fig. 2 Teile der Ansicht von Fig. 1 im vergrösserten Masstab, Fig 3 eine Detailansicht einer Scheibe mit einer Abnahmevorrichtung für das Gemisch.

Die Vorrichtung nach den Zeichnungen weist eine in Lagern 2 und 3 gelagerte Welle 1 auf, welche durch einen Antrieb 4 mit hoher Drehzahl angetrieben werden kann. An der Welle 1 sind mehrere Scheiben 5, 6, 7 und 8 befestigt. Jede Scheibe 5 bis 8 weist einen ringförmigen Zuführungsbereich 9 auf, welcher durch einen Düsenspalt 10a in eine Ringkammer 11a mündet. Die Kammer 11a weist annähernd in der Ebene des Düsenspaltes 10a eine Auslassleitung 12a auf, welche sich in radialer Richtung zunächst erweitert und durch einen weiteren Düsenspalt 10b in eine Kammer 11b mündet. An diese Kammer 11b schliesst sich in analoger Weise eine weitere Auslassleitung 12b und eine weitere Kammer 11c an. Die letzte Kammer 11c mündet in eine Abführleitung 13. Jede Kammer 11a bis 11c besitzt an ihrer Aussenwand einen V-förmigen Querschnitt und zu beiden Seiten des Düsenspaltes je eine Abführleitung 14, welche mit Sammelleitungen 20 verbunden sind. Die Welle 1 ist teilweise hohl ausgeführt und besitzt drei Kammern 15, 16, und 17. Die Kammer 15 besitzt zwei in radialer Richtung verlaufende Auslassleitungen 21, welche in den Zuführbereich 9 der beiden Scheiben 5 und 6 münden. Das Ursprungsgemisch wird über eine Leitung 18 und einer Ringbohrung 19, etwa durch einen feststehenden Ring (nicht gezeigt), der Kammer 15 zugeführt. Durch die bei der Drehung der Scheiben 5 bis 8 auftretenden Zentrifugalkräfte wird das Ursprungsgemisch durch die Leitungen 21 und die Zuführbereiche 9

-4-

den Düsen 10a zugeführt. Unmittelbar danach tritt das Gemisch in die Kammer 11a ein, welche an der Aussenwand einen V-förmigen Querschnitt mit einer Auslassdüse 22a aufweist. Die eigentliche Trennung der beiden Fraktionen findet zwischen der Auslassdüse 22 und der als Abschäler wirkenden V-förmigen Wand statt. Dabei wird die leichte Fraktion nach aussen in die Abführleitungen 14 gedrängt, wogegen die schwere Fraktion durch die Auslassdüse 22 tritt. Der Trennvorgang wiederholt sich in analoger Form in den beiden anschliessenden Ringkammern 11b und 11c. Die Abführleitungen 13 für die schwere Fraktion führen über eine gemeinsamen Sammelleitung 23 in die Kammer 16 der Welle 1, von wo das Gemisch in analoger Weise durch die Scheibe 7 hindurchgeführt wird. Dabei wird die schwere Fraktion durch die Abführleitung 13 der Scheibe 7 nach aussen abgeführt, wogegen die leichte Fraktion in den Abführleitungen 14 der Scheibe 7 über die Leitungen 20a und 20b und einer Sammelleitung 23 wieder zur Leitung 18 zurückgeführt wird. Dadurch wird eine optimale Ausnutzung des Ursprungsgemisches erzielt.

Die Abführleitungen 20a und 20b für die leichte Faktion P werden über eine Sammelleitung 25 der Kammer 17 der Welle 1 und von dieser den einzelnen Düsenspalten 10a - 10c und Ringkammern 11a - 11c der Scheibe 8 zugeführt. Die leichte Fraktion P des Gemisches wird von den Abführleitungen 20a und 20b der Scheibe 8 über eine Sammelleitung 26 nach aussen abgeführt. Die schwere Fraktion W des Gemisches verlässt die erfindugsgemässe Vorrichtung über die Abführleitung 13 der Scheibe 7. Aus Fig. 3 ist eine Abnahmevorrichtung für die beiden Fraktionen des Gemisches am äusseren Rand der Scheibe 5 ersichtlich. Diese Abnahmevorrichtung besteht aus feststehenden Scheiben 31 bis 34, welche von einem äusseren feststehenden Ring (nicht gezeigt) gehalten werden.

Patentansprüche:

1. Vorrichtung zum Trennen bezw. Anreichern von gasförmigen Gemischen, insbesondere Isotopengemischen, in Fraktionen verschieden grossen spezifischen Gewichtes, vorzugsweise zur Anreicherung von U 235 als Uranhexafluorid mit einer mit hoher Geschwindigkeit umlaufenden Scheibe, welche einen in radialer Richtung verlaufenden, ringförmigen Zuführbereich für das Gemisch aufweist, welcher durch minestens einen, in radialer Richtung verlaufenden Düsenspalt einer ringförmigen Düse unterteilt ist und der Zuführbereich anschliessend an den Düsenspalt annähernd in der Ebene des Spaltes einen ringförmigen, in radialer Richtung verlaufenden Abführkanal für die schwere Fraktion des Gemisches und zu beiden Seiten des Düsenspaltes in radialer Richtung verlaufende ringförmige Abführkanäle für die leichte Fraktion des Gemisches aufweist, dadurch gekennzeichnet, dass mehrere Scheiben parallel zueinander auf einer gemeinsamen Welle angeordnet sind und die Ableitkanäle für die leichte und/oder schwere Fraktion des Gemisches mehrerer Scheiben miteinander verbunden sind.

2. Vorrichtung nach Anspruch 1, dadurch gekennzeichnet, dass ein Ableitkanal mindestens einer Scheibe mit dem Einlass des Zuführbereiches einer anderen Scheibe verbunden ist.

0008588

FIG.1

FIG.2

FIG.3

FIG.4

Europäisches
Patentamt

**EUROPÄISCHER RECHERCHENBERICHT**

Nummer der Anmeldung

EP 78 10 0716

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | B 01 D 59/20 53/24 |
| | DE - B - 1 061 296 (DEGUSSA) <br> * Ansprüche 1,2; Abbildung 1 * <br><br> --- | 1,4 | |
| AD | DE - B - 1 283 809 (INT. RESEARCH ESTABLISHMENT) <br> * Anspruch 1 * <br> & AT - A - 238 697 <br><br> --- | 1 | |
| A | FR - A - 645 564 (IMPERIAL CHEMICAL) <br> * Zusammenfassungen 1,3 * <br><br> ---- | 1 | **RECHERCHIERTE SACHGEBIETE (Int. Cl.³)** <br><br> B 01 D 59/00 <br> 59/18 <br> 59/20 <br> 53/24 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-01-1979 | NICOLAS |

EPA form 1503.1   06.78